# DEMANDE DE BREVET EUROPEEN

(11) **EP 3 757 892 A1**
(43) Date de publication de la demande: **30.12.2020**
(21) Numéro de dépôt: 19305853.4
(22) Date de dépôt: 26.06.2019
(51) Int. Cl.: G06K 19/07

(54) **PROCÉDÉ DE COMMUNICATION RADIOFRÉQUENCE ENTRE UN LECTEUR ET UN DISPOSITIF RELIÉ À UN PÉRIPHÉRIQUE, AVEC MESURE DE CHAMP RADIOFRÉQUENCE**

(71) Demandeur: GEMALTO SA, 92190 Meudon (FR)
(72) Inventeur: BUTON, Christophe, 13881 Gémenos Cedex (FR); ZEAMARI, Ali, 13881 Gémenos Cedex (FR); CAPOMAGGIO, Grégory, 13881 Gémenos Cedex (FR)
(74) Mandataire: Milharo, Emilien

(57) **Abrégé**

L'invention concerne un procédé de communication entre un lecteur radiofréquence (16) et un dispositif transpondeur radiofréquence (2) relié à un périphérique (4), ledit dispositif (2) étant configuré pour piloter un traitement électronique par ledit périphérique (4) et pour mesurer une valeur du champ électromagnétique,
caractérisé en ce qu'il comprend l'étape selon laquelle le dispositif transpondeur radiofréquence (2) pilote le périphérique (4) pour ledit traitement électronique, après détermination par le dispositif d'une valeur (IA) suffisante de champ électromagnétique (13), pour réaliser complètement ledit traitement électronique.

L'invention concerne également le système correspondant.

## Description

### Domaine de l'invention.

L'invention concerne un procédé de communication radiofréquence entre un lecteur et un dispositif relié à un périphérique, comprenant une étape de mesure d'une valeur du champ radiofréquence.

Le dispositif est configuré pour piloter un périphérique et pour mesurer une valeur du champ électromagnétique.

Elle concerne notamment des cartes de paiement sans-contact biométriques, des cartes à forte valeur ajoutée avec des périphériques divers, tels que capteur biométrique, afficheur, microphone, pavé de signature, interrupteur, clavier, autres microcontrôleurs, générateur de numéro à usage unique, générateur cryptographique, de certificats, moyens de chiffrement / déchiffrement...

L'invention trouve notamment application ou utilisation pour le pilotage de tout périphérique électronique.

### Art antérieur.

Il existe de nombreux système de gestion d'énergie dans des dispositifs radiofréquences qui comprennent des mécanismes de contrôle de l'énergie provenant d'un champ radiofréquence.

En particulier, on connait la demande de brevet EP 2705467. Il décrit un système de communication radiofréquence notamment un téléphone NFC, comprenant une puce SIM et des moyens de sélection de source d'énergie de la puce SIM. Il comprend un gestionnaire d'énergie pour sélectionner une source d'énergie alternative (batterie, capacités) afin d'alimenter la puce SIM dès que le courant d'alimentation d'origine électromagnétique reçue par la puce SIM n'est pas suffisant.

Par ailleurs dans le domaine des cartes biométriques, ces dernières années, des cartes de paiement ont fourni des capacités d'authentification renforcées grâce à l'intégration de capteurs biométriques sur le corps de la carte. Ces cartes utilisent la reconnaissance des empreintes digitales comme alternative au code PIN ou à une signature pour authentifier le titulaire de la carte lors d'une transaction de paiement.

A l'origine, l'authentification biométrique sur la carte se limitait principalement aux cartes à contacts étant donné que les caractéristiques électriques des différents composants, en particulier le capteur d'empreintes digitales, n'était pas compatible avec l'architecture des cartes sans-contact, mettant en oeuvre une très faible consommation de courant, des niveaux de tension faible et des durées de traitement relativement courts afin d'avoir des performances radiofréquences acceptables.

Depuis 2017, l'émergence de nouvelles générations de capteur d'empreintes digitales, en plus du développement d'algorithmes d'extraction / correspondance biométrique optimisés, permet aux fabricants de proposer de l'authentification biométrique sur des cartes à interface duale (contacts et sans contact) ou des cartes purement sans-contact.

En fait, les contrôleurs sécurisés actuels, intégrant des certificats et des applications de paiement, ne sont pas suffisamment puissants pour exécuter le processus d'authentification biométrique, puisque cette opération exige habituellement des unités arithmétiques spécifiques intégrant des calculs à virgule flottante, des capacités de traitement de signal numérique (DSP) et une grande quantité de mémoire RAM.

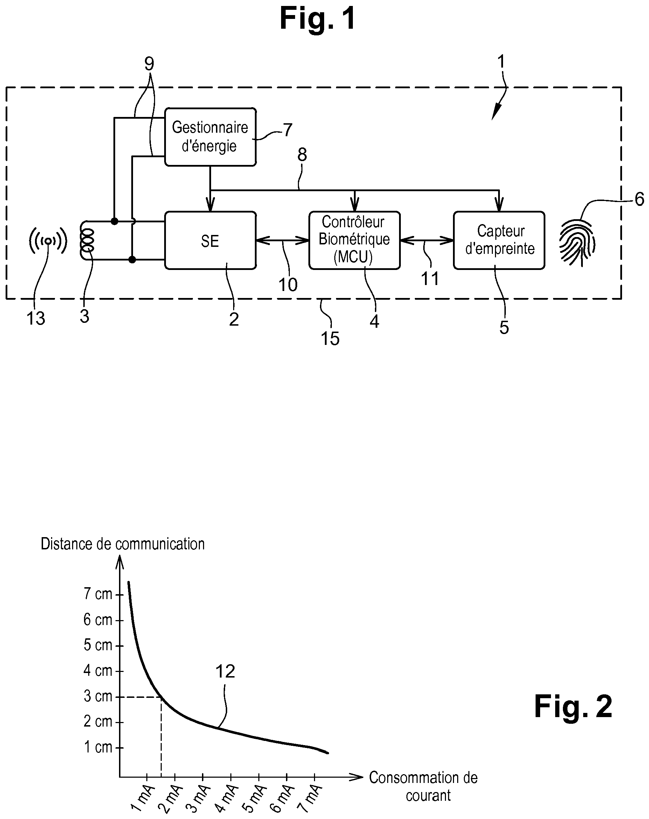

C'est pourquoi presque toutes les cartes sans-contact biométriques s'appuient généralement sur une architecture à double microcontrôleur (contrôleur sécurisé SE + microcontrôleur biométrique MCU), tel que représenté par la figure 1.

Dans une telle architecture, le contrôleur sécurisé SE ordonne le microcontrôleur biométrique de déclencher une séquence biométrique (acquisition - extraction - correspondance) lorsque l'opération de paiement requiert une authentification de l'utilisateur quand le montant est supérieur à 30 euros.

Sur une alimentation par induction électromagnétique du système sans contact, la distance de fonctionnement (distance entre la carte et le lecteur) est généralement limitée par la capacité de transfert de puissance. En effet, plus grande est la distance entre les bobines d'antenne du lecteur radiofréquence et de la carte, plus petit est le coefficient de couplage électromagnétique (fig. 2).

Sur cette figure on observe qu'à une distance de fonctionnement critique, la carte n'obtient pas assez de champ magnétique provenant du lecteur pour alimenter correctement en énergie des éléments internes et effectuer des opérations de calcul ou de traitement électroniques (la plupart du temps la carte est en attente dans ce cas).

La distance de fonctionnement pourrait être augmentée en réduisant la consommation de courant dans l'ensemble du transpondeur. Habituellement, les contrôleurs sécurisés de carte à puce sont spécialement conçus pour effectuer toute opération sans-contact avec une petite quantité d'énergie.

Des opérations comme des écritures dans une mémoire EEPROM ou des calculs cryptographiques ont été spécialement optimisés pour consommer moins de 1 ou 2 mA. En outre, tous les fabricants de contrôleurs sécurisés ont mis au point des fonctionnalités spécifiques à l'intérieur de la puce afin d'optimiser la consommation de courant selon l'intensité du champ magnétique reçu sur la bobine de l'antenne (c.-à-d. adaptation fréquence d'horloge du microprocesseur CPU par rapport à l'intensité du champ radiofréquence).
Grâce à un capteur de niveau champ magnétique intégré, le contrôleur sécurisé est en mesure de ralentir la transaction en cours (consommant évidemment moins de courant) afin de pouvoir opérer à une distance plus grande.

Dans les systèmes actuels à capteur d'empreinte digitale, le contrôle de la consommation de courant (et donc de la distance de fonctionnement) est plus compliqué car une partie de l'authentification utilisateur est effectuée par le composant MCU biométrique et le composant capteur d'empreintes digitales.

Habituellement, ces deux composants consomment beaucoup plus de courant que l'élément sécurisé SE et il est impossible d'ajuster la vitesse de traitement en fonction de l'intensité de champ radiofréquence. En outre, une augmentation de la durée de l'authentification d'une empreinte n'est pas vraiment une option envisageable en raison de contraintes de durée de traitement définies par les autorités bancaires (Mastercard, VISA) (exigeant d'authentifier un utilisateur en moins d'une seconde).

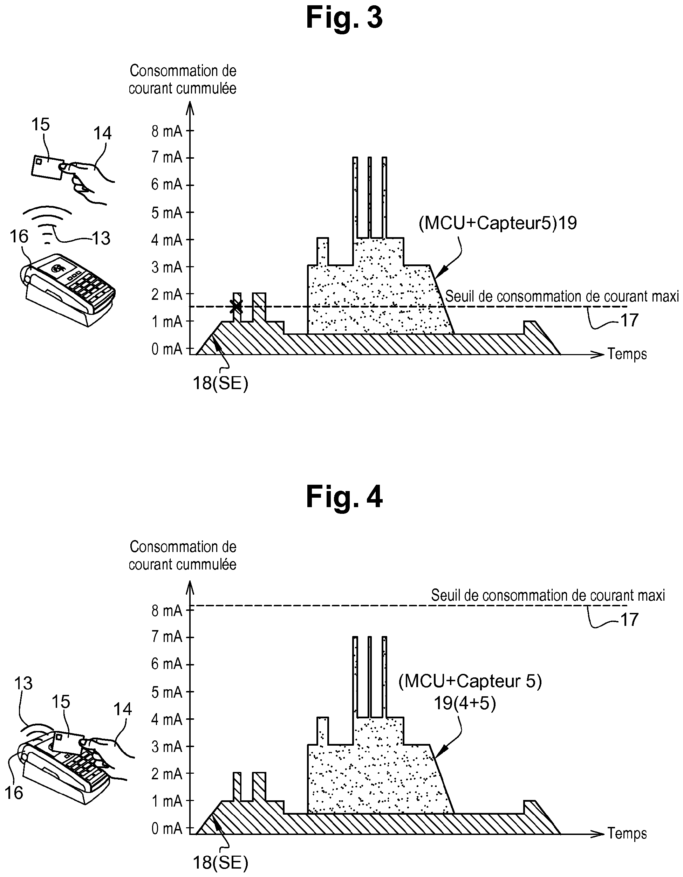

Les inventeurs ont observé et diagnostiqué le problème de distance de fonctionnement des cartes biométriques sans-contact actuelles expliqué en référence avec les figures 3 à 5.

On connait des cartes biométriques comportant des batteries ou des super condensateurs aux structures ci-dessus pour alimenter les composants de la carte lors de pic de consommation. Cependant, l'intégration d'une batterie principale ou de super condensateurs comprend de nombreuses contraintes suivantes pour le fabricant de la carte :
- Augmentation significative du prix de la carte ;
- Les chaînes de montage à la fabrication sont plus complexes ;
- Les cartes à batterie doivent passer des tests de conformité à des interférences électromagnétiques spécifiques (CE - FCC) ;
- La batterie crée généralement un effet écran ou de blindage, réduisant les performances radiofréquences par rapport aux cartes sans batterie ;
- Une durée de vie de la carte avec batterie est limitée du fait de la durée de vie de la batterie.

### Problème technique.

L'invention a notamment pour objectif de résoudre les inconvénients susvisés.

Elle vise notamment une structure permettant d'éviter les nombreuses contraintes pour le fabricant de la carte tout en préservant une bonne expérience utilisateur.

Elle vise une configuration de structure électronique de dispositif radiofréquence avec périphérique gourmand en énergie, permettant d'éviter des problèmes de communication liés à une énergie insuffisante.

### Résumé de l'invention.

L'objectif de l'invention est de concevoir un mécanisme de contrôle de l'énergie, par un élément sécurisé, afin de démarrer / reporter le traitement biométrique selon la quantité d'énergie disponible dans le champ électromagnétique, afin d'éviter une gamme de distances pour lesquelles la transaction sans-contact échoue par manque d'énergie.

Bien que l'invention décrive particulièrement la carte sans-contact « biométrique » pour des transactions sécurisées, l'invention vise à protéger tout dispositif sans-contact confrontés au même problème de fonctionnement selon la distance.

A cet effet, l'invention a pour objet un procédé de communication entre un lecteur radiofréquence et un dispositif transpondeur radiofréquence relié à un périphérique, ledit dispositif étant configuré pour piloter un traitement électronique par ledit périphérique et pour mesurer une valeur du champ électromagnétique,
Le procédé est caractérisé en ce qu'il comprend l'étape selon laquelle le dispositif transpondeur radiofréquence pilote le périphérique pour ledit traitement électronique, après détermination par le dispositif d'une valeur (IA) suffisante de champ électromagnétique ou d'intensité courant, pour réaliser complètement ledit traitement électronique.

Selon d'autres caractéristiques du procédé,
- Il peut comprendre une étape de configuration du contrôleur comprenant une phase de détermination d'un seuil de champ ou d'intensité suffisant pour l'exécution complète par ledit périphérique d'une instruction du contrôleur et une étape de mémorisation dudit seuil dans le contrôleur ;
- Il peut comprendre les étapes suivantes :
   - Si la valeur mesurée d'intensité de courant est égale ou supérieure à ladite valeur seuil, l'élément sécurisé ordonne le contrôleur biométrique d'exécuter ledit traitement électronique via une commande correspondante ;
   - Si la valeur mesurée est inférieure à la valeur seuil, l'élément sécurisé interrompt le traitement électronique en cours correspondant à sa commande et mesure de nouveau l'intensité du champ électromagnétique en mode récurrent ;
- Il peut mettre en oeuvre une requête du lecteur au dispositif et d'au moins une étape d'émission d'un signal d'attente au lecteur si la valeur mesurée pendant la communication est inférieure audit seuil ;
- Le périphérique comprend un afficheur ou un composant électronique de communication, un composant de reconnaissance vocale, un composant d'intelligence artificielle et/ou d'apprentissage autonome, un composant de collecte et de mémorisation de données.

L'invention a également pour objet un système de communication entre un lecteur radiofréquence et un dispositif transpondeur radiofréquence relié à un périphérique, ledit dispositif étant configuré pour piloter un périphérique et pour mesurer une valeur du champ électromagnétique ; Le système est caractérisé en ce que le dispositif transpondeur radiofréquence pilote le périphérique pour un traitement électronique après détermination par le dispositif d'une valeur suffisante de champ radiofréquence pour réaliser complètement ledit traitement électronique L'invention a notamment l'avantage d'améliorer l'expérience utilisateur sur des transactions sans-contact. Elle permet également d'améliorer les tests de certification EMV.

### Brève description des figures.

- La figure 1 illustre une architecture électronique basique de carte biométrique de l'art antérieur ;
- La figure 2 illustre une courbe 12 de consommation de courant d'une carte sans-contact en fonction de la distance de fonctionnement la séparant d'un terminal (ou lecteur) radiofréquence ;
- La figure 3 illustre une répartition des consommations de courant parmi les différents composants d'une carte biométrique sans contact lorsque la carte est éloignée d'un terminal de paiement ;
- La figure 4 illustre une répartition des consommations de courant parmi les différents composants d'une carte biométrique sans contact lorsque la carte est proche d'un terminal de paiement ;
- La figure 5 illustre une répartition des consommations de courant parmi les différents composants d'une carte biométrique sans contact lorsque la carte est à une distance intermédiaire des cas précédents ;
- La figure 6 illustre une structure de carte de l'art antérieur similaire aux précédente figures mais avec une batterie ;
- La figure 7 illustre plusieurs étapes de mesure récurrente d'énergie combinées mixte avec un mécanisme d'extension de temps d'attente.

### Description.

Dans les figures, des références identiques d'une figure à une autre se référant à des éléments identiques ou similaires.

A la figure 1, est illustrée une structure ou architecture d'un système électronique 1 d'une carte biométrique de l'art antérieur. Le système 1 comprend un dispositif transpondeur radiofréquence 2, 3 comprenant un microcontrôleur radiofréquence 2 (SE) et une interface à antenne 3 pour une communication radiofréquence et une collecte d'énergie d'origine électromagnétique 13.

Le dispositif transpondeur est configuré pour piloter un périphérique 4, auquel il est relié par une connexion 10, et pour mesurer une valeur du champ électromagnétique de manière connue de l'homme de l'art.
Le périphérique 4 est constitué ici d'un contrôleur biométrique (MCU) et est relié ici par une connexion 11 à un capteur biométrique 5 pour capter des empreintes digitales 6.
Le système peut comprendre un gestionnaire d'énergie 7 intégré ou non au contrôleur 2. Il peut prélever de l'énergie par branchement 9 en parallèle à l'antenne 3. Le gestionnaire 2 peut gérer les lignes d'alimentation 8 de chaque composant 2, 4, 5.

La structure du système 1 est donc ici à double microcontrôleur (contrôleur sécurisé (2, SE) associé à un microcontrôleur biométrique (4, MCU) et est commune à presque toutes les cartes sans-contact biométriques actuelles.

Une telle structure fonctionne comme ci-après. Lorsque une transaction de paiement requiert une authentification de l'utilisateur (par exemple, avec montant supérieur à 30 euros), le contrôleur sécurisé (2, SE) ordonne le microcontrôleur biométrique (4, MCU) de déclencher une séquence biométrique (par exemple : acquisition - extraction - correspondance).

Sur les figures 3 à 5, le problème de distance de fonctionnement des cartes biométriques sans-contact actuelles, observé et diagnostiqué par les inventeurs est expliqué ci-après.

### Carte éloignée du lecteur / terminal radiofréquence (Fig.3)

Lorsqu'un utilisateur 14 met sa carte 15 sans-contact biométrique loin du terminal radiofréquence 16 (ici un terminal bancaire POS : Point of sale en anglais), l'élément sécurisé SE n'a pas assez d'énergie pour effectuer des opérations de base, le niveau maximal 17 de consommation de courant permis par cette distance d'environ 3 cm étant environ de 1, 5 mA (fig. 2).
La courbe « courant disponible par rapport à la distance opératoire » est donnée à titre d'exemple. Bien évidemment, chaque produit radiofréquence est caractérisé par une courbe de récupération d'énergie propre à son architecture (taille/format d'antenne, contrôleur sécurisé, accord de fréquence, etc...) .
On observe également sur cette figure 3 que le niveau 19 de besoin en courant cumulé du MCU 4 et du capteur 5 (ici environ 7 mA) dépasse allègrement le niveau maximal 17 de consommation permis à cette distance (ici environ 1,5 mA).

Dans de telles conditions, le terminal n'est pas en mesure de sélectionner la carte sans-contact avec succès. Aucune information ou alerte n'est affichée sur le terminal sauf « Présenter Carte ». Cela peut être considéré comme le cas d'utilisation général.

### Carte à proximité du lecteur sans contact / terminal (fig.4).

Lorsque l'utilisateur met sa carte sans-contact biométrique près du terminal, l'élément sécurisé SE dispose assez d'énergie pour exécuter des opérations internes.

On observe également sur cette figure 4 que le niveau 19 de besoin en courant cumulé du MCU 4 et du capteur 5 (ici environ 7 mA) est largement couvert par le niveau maximal 17 de consommation permis à cette distance (ici environ 8 mA).

Dans de telles conditions, le terminal 16 est capable de sélectionner la carte sans-contact et de démarrer une transaction (paiement) avec succès. Ici, l'énergie fournie est assez bonne pour effectuer correctement l'opération d'authentification de l'empreinte et pour finaliser la transaction (paiement).

À la fin, le terminal notifie à l'utilisateur, que la transaction a été effectuée correctement.

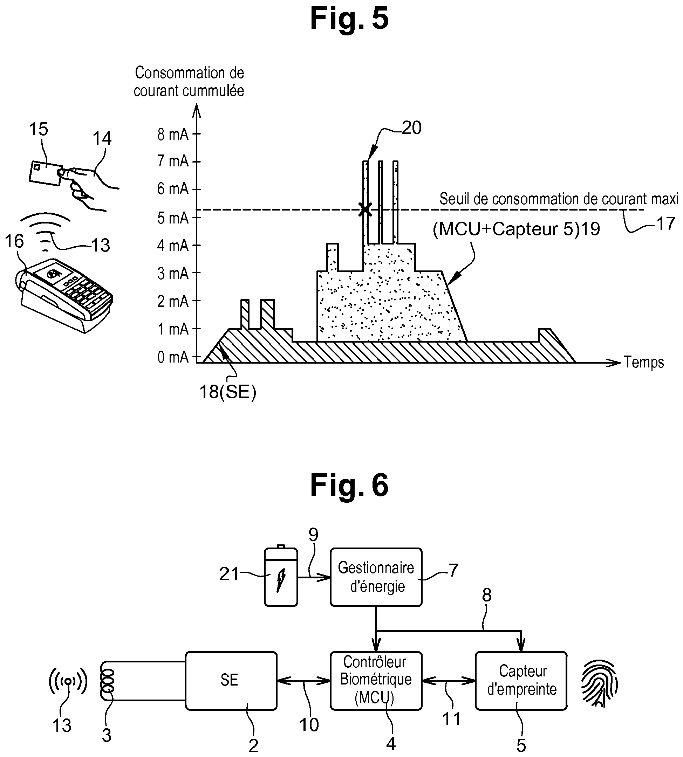

### Carte à distance moyenne par rapport au lecteur sans-contact / terminal (fig. 5).

Maintenant l'utilisateur approche doucement sa carte biométrique sans-contact du terminal, et l'élément sécurisé SE reçoit suffisamment d'énergie pour exécuter des opérations internes.

On observe également sur cette figure 5 que le niveau 19 de besoin en courant cumulé du MCU 4 et du capteur 5 (ici environ 7 mA à l'un des pics de consommation 20) n'est pas totalement couvert par le niveau maximal 17 de consommation permis à cette distance (ici environ 5 mA).

Dans de telles conditions, le terminal 16 est capable de sélectionner avec succès la carte sans-contact et de démarrer une transaction (paiement).
Toutefois, il lui manque encore de l'énergie, (par exemple au pic 20 de consommation), pour effectuer correctement l'opération d'authentification de l'empreinte de doigt.

À ce stade, l'élément sécurisé SE est involontairement réinitialisé (RESET) du fait du manque d'énergie, et la session de communication cesse.
Un avertissement d'« Echec de Transaction » s'affiche sur l'écran du terminal.

Avec le système existant, toute approche lente de la carte vers un terminal de paiement est définitivement à proscrire pour éviter un échec de transaction radiofréquence. Concrètement, de telles contraintes opératoires peuvent avoir une incidence négative sur l'expérience utilisateur.

### Solution avec une architecture à batterie principale (Fig. 6).

Cette figure diffère de la figure 1 en ce qu'elle comprend une batterie 16 pour alimenter le gestionnaire d'énergie 7 au lieu de prélever de l'énergie du champ électromagnétique 13 via la bobine 3.

Afin de résoudre ce problème, les fabricants de cartes de paiement ont décidé d'incorporer une batterie principale 21 à l'intérieur du corps de la carte pour fournir l'énergie nécessaire au circuit biométrique. De cette façon, le contrôleur biométrique et le capteur d'empreintes digitales ne sont plus alimentés par le champ électromagnétique, et le besoin en énergie d'origine électromagnétique dépend seulement de l'activité du contrôleur sécurisé.

De cette façon, il est impossible d'avoir le scénario décrit à la figure 5 (où l'authentification biométrique échoue une fois que la carte sans-contact a été correctement sélectionnée). Pourtant, malgré les avantages décrits ci-dessus, l'intégration d'une batterie principale mène à de nombreuses contraintes pour le fabricant de la carte décrite précédemment. :
Selon une caractéristique d'un mode préféré de mise en oeuvre de l'invention, le procédé comprend l'étape selon laquelle le dispositif transpondeur radiofréquence 2, 3 pilote le périphérique 4, 5 pour un traitement électronique après détermination par le dispositif d'un champ radiofréquence suffisant 13 pour réaliser complètement ledit traitement électronique.

A cet effet, pour déterminer un champ radiofréquence 13 suffisant pour réaliser complètement ledit traitement électronique, dans l'exemple, l'invention peut de préférence utiliser, à bon escient et avantageusement le mécanisme de mesure du champ magnétique (introduit précédemment) car il est actuellement disponible dans presque tous les contrôleurs de carte à puce.

Le procédé de l'invention est maintenant décrit
on va décrire maintenant un exemple du mode préféré de mise en oeuvre du procédé de communication de l'invention, entre un lecteur radiofréquence NFC et un dispositif transpondeur radiofréquence relié à un périphérique.

Dans l'exemple, le dispositif 2, 3 est configuré comme celui de la figure 1 pour piloter un périphérique 4 et pour mesurer une valeur du champ électromagnétique 13 d'un terminal lecteur 16. Le périphérique comprend ici un microcontrôleur 4, MCU configuré pour effectuer un traitement de données biométriques;
Dans d'autres utilisations ou configurations possible, visée par l'invention, le périphérique pourrait être tout autre composant électronique.
Par exemple et de manière non limitative, le périphérique peut comprendre un afficheur ou un composant électronique de communication (BLE), un composant de reconnaissance vocale RV, un composant d'intelligence artificielle AI et/ou d'apprentissage autonome ML, un composant de collecte CC et de mémorisation de données CM.

De préférence, l'invention s'applique à des systèmes sans batterie ou sans supra condensateur (où elle prend plus de sens). Toutefois, elle pourrait s'appliquer à des systèmes ayant de telles sources d'énergie, pour différentes raisons notamment pour ne pas avoir à puiser inutilement de l'énergie ou réserver de l'énergie à d'autres utilisations. De tels systèmes pourraient être utilisés sur des cartes avec source d'énergie de manière à :
- Utiliser exclusivement l'énergie du champ si celui-ci est suffisant pour effectuer la dite opération par le périphérique.
- Utiliser l'énergie de la source embarquée le cas échéant.

Selon une autre caractéristique du mode préféré, le procédé peut comprendre une étape de configuration du SE après une phase de détermination d'un seuil de champ suffisant pour l'exécution complète par le périphérique d'une instruction du SE ; puis une étape de mémorisation de ce seuil dans le SE.

A cet effet, dans l'exemple, l'invention peut prévoir une méthode de caractérisation de l'intensité minimale (seuil) de champ magnétique requise afin d'effectuer avec succès une opération d'authentification biométrique complète (comme traitement électronique du MCU et du capteur).

Une caractérisation précise peut être faite de préférence avec un coupleur sans-contact de test configuré de manière à pouvoir commander une opération d'authentification biométrique complète et à augmenter progressivement l'intensité du champ magnétique, jusqu'à ce que le processus biométrique d'authentification complet soit réalisé avec succès.

Puis, dès qu'une même valeur d'intensité de champ électromagnétique est appliquée, l'invention peut prévoir de transmettre une commande APDU spécifique à la carte sans-contact biométrique afin de lire / mémoriser le champ électromagnétique magnétique mesuré par ses circuits internes et définir une valeur seuil.

Alternativement, cette valeur minimale seuil peut être connue par ailleurs notamment par calcul et simplement consignée en mémoire au cours d'une personnalisation en fonction de la structure et profil de consommation du système impliqué. Une valeur peut être déterminée par tâtonnement ou être définie à priori en choisissant une valeur positionnée largement au-dessus de la valeur minimale.

Ainsi, au cours d'une vraie transaction sans-contact, lorsqu'une commande spécifique APDU demande d'effectuer une opération biométrique, l'élément sécurisé SE peut mesurer tout d'abord l'intensité du champ électromagnétique.

Le système peut fonctionner en mettant en oeuvre des étapes ci-après du procédé (ou être configuré avec un programme correspondant):
- Si la valeur mesurée d'intensité de courant IB (ou de champ) est égale ou supérieure à la valeur seuil IA, l'élément sécurisé SE ordonne le MCU biométrique d'exécuter le traitement électronique (en particulier dans l'exemple) l'opération biométrique via une commande correspondante, notamment APDU;
- Si la valeur mesurée d'intensité de courant IB (ou de champ) est inférieure à la valeur seuil IA, l'élément sécurisé interrompt le traitement électronique en cours correspondant à sa commande, puis mesure de nouveau et de préférence, en mode récurrent (polling en anglais), l'intensité du courant IB (ou autre valeur équivalente du champ électromagnétique du terminal par une autre méthode connue de l'homme de l'art)

Selon une caractéristique du mode préféré, le procédé met en oeuvre une requête du lecteur au dispositif et d'au moins une étape d'émission d'un signal d'attente WTX au lecteur si la valeur mesurée IB pendant la communication est inférieure au seuil IA.

En effet, dans l'exemple des cartes bancaires conformes à la spécification EMVco, la durée maximale entre une commande de lecteur (PCD) et une réponse de dispositif transpondeur PICC, plus connu sous l'acronyme (FDT) (PICC Frame Delay Time) est actuellement définie par la spécification EMVCo, et cette valeur ne doit pas dépasser 38,7ms.

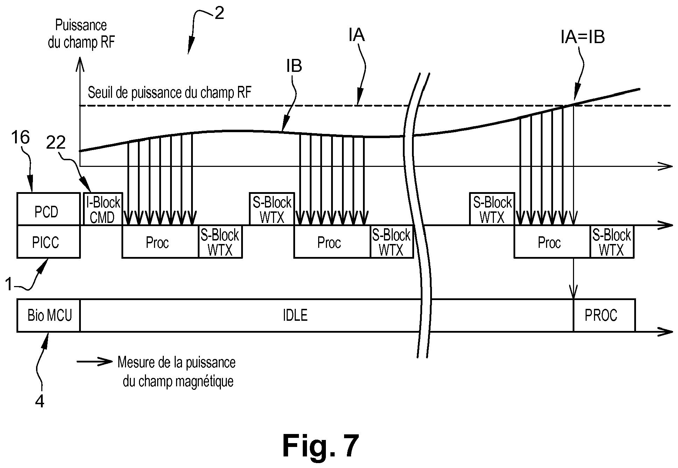

Dans la plupart des cas, la mesure d'intensité du champ magnétique en mode récurrent nécessite une plus longue durée. Dans ce cas, le dispositif transpondeur (PICC) peut utiliser le mécanisme de « Prorogation du délai d'attente » (généralement appelé WTX), défini par le standard ISO14443, qui permet de fractionner le traitement du dispositif transpondeur (PICC) sur 2 périodes ou plus, tel que décrit à la figure 7.

De cette façon, l'utilisateur peut présenter la carte biométrique au terminal POS, même avec une approche vraiment lente, sans pour autant déclencher un échec de la transaction indésirable, par manque d'énergie suffisante.

On se référera notamment à la figure 7, pour illustrer plusieurs étapes de mesure récurrente d'énergie combinées mixte avec un mécanisme d'extension de temps d'attente.

Au début du graphe à gauche, la carte (1, PICC) est placée dans le champ radiofréquence d'un lecteur (16, PCD) pour effectuer une transaction de paiement ; Comme le montant est élevé, alors, le lecteur demande une authentification de l'utilisateur par biométrie.
Cependant, le contrôleur de sécurité SE, diffère ou bloque 22 ou conditionne l'envoie d'une instruction au MCU dans ce sens à un test de niveau d'énergie. Il mesure alors l'énergie disponible par mesure d'une valeur IB pour permettre au MCU d'effectuer le traitement requis complétement.

Le PICC (1, 2, SE) procédé au test ou contrôle de la valeur IB, comme son niveau est inférieur à la valeur IA prédéterminée, le SE émet un premier message WTX d'attente au lecteur ;
Puis, le lecteur reçoit ce message d'attente et pendant ce temps, le PICC procède à nouveau au test de mesure de valeur IB de champ comme précédemment.
La valeur IB est toujours inférieure à la valeur seuil IA et le processus se déroule comme précédemment avec un second puis « n » transmissions de commande d'attente WTX, jusqu'à ce que le champ mesuré soit suffisant au point IA = IB.

Alors, le SE déclenche le déblocage de la commande de traitement au périphérique MCU ; Le SE peut transmettre une dernière demande d'extension d'attente le temps de recevoir le résultat du traitement demandé au MCU.

Ainsi, le traitement par le périphérique a pu être exécuté grâce aux dispositions matérielles et logicielle de l'invention.

Comme la valeur IB du champ mesuré est inférieure au seuil IA, alors le contrôleur périphérique MCU demeure inactif.
Malgré la réception d'une demande du lecteur pour authentifier l'utilisateur (qui a son doigt sur le capteur d'empreinte), Le contrôleur 2, SE suspend toute instruction au périphérique

Une autre façon de mettre en place un mécanisme de contrôle de l'énergie pensée par les inventeurs est de faire contrôler la valeur de l'intensité IB du champ magnétique par le contrôleur sécurisé au démarrage et permettre d'activer le protocole de communication sans-contact uniquement lorsque cette valeur IB dépasse le seuil mémorisé IA.

A cet effet, l'invention peut prévoir, (selon un autre aspect distinct de l'invention, indépendamment de l'objet de la revendication 1), de mettre en oeuvre une étape de contrôle de la valeur de l'intensité IB du courant (ou du champ magnétique) par le contrôleur sécurisé 2, SE à son démarrage et une étape de déclenchement de l'activation du protocole de communication sans-contact (ou communication radiofréquence avec le terminal) par le contrôleur SE, uniquement lorsque cette valeur IB dépasse le seuil mémorisé IA.

Toutefois, cette façon de procéder est moins préférée car elle a l'inconvénient de gêner les performances de rapidité sans-contact quand aucune opération biométrique n'est requise (c.-à-d. quand le montant est inférieur à 20€ par exemple).

## Revendications

1. Procédé de communication entre un lecteur radiofréquence (16) et un dispositif transpondeur radiofréquence (2) relié à un périphérique (4), ledit dispositif (2) étant configuré pour piloter un traitement électronique par ledit périphérique (4) et pour mesurer une valeur du champ électromagnétique,
**caractérisé en ce qu'**il comprend l'étape selon laquelle le dispositif transpondeur radiofréquence (2, SE) pilote le périphérique (4) pour ledit traitement électronique, après détermination par le dispositif d'une valeur (IA) suffisante de champ électromagnétique (13) ou d'intensité courant, pour réaliser complètement ledit traitement électronique.

2. Procédé selon la revendication précédente, **caractérisé en ce qu'**il comprend une étape de configuration du contrôleur (2, SE) comprenant une phase de détermination d'un seuil (IA) de champ ou d'intensité suffisant pour l'exécution complète par ledit périphérique d'une instruction du SE et une étape de mémorisation dudit seuil (IA) dans le contrôleur (2, SE).

3. Procédé selon l'une des revendications précédentes, **caractérisé en ce qu'**il comprend les étapes suivantes :
- Si la valeur mesurée d'intensité (IB) de courant est égale ou supérieure à ladite valeur seuil (IA), l'élément sécurisé SE ordonne le MCU biométrique d'exécuter ledit traitement électronique via une commande APDU correspondante ;
- Si la valeur mesurée (IB) est inférieure à la valeur seuil (IA), l'élément sécurisé interrompt le traitement électronique en cours correspondant à sa commande et mesure de nouveau l'intensité IB du champ électromagnétique en mode récurrent.

4. Procédé selon l'une des revendications précédentes, **caractérisé en ce qu'**il met en oeuvre une requête du lecteur au dispositif et d'au moins une étape d'émission d'un signal d'attente WTX au lecteur si la valeur mesurée pendant la communication est inférieure audit seuil.

5. Procédé selon l'une des revendications précédentes, **caractérisé en ce que** ledit périphérique (4, MCU) comprend un microcontrôleur (4, MCU) configuré pour effectuer un traitement de données biométriques.

6. Procédé selon l'une des revendications précédentes, **caractérisé en ce que** ledit périphérique (4, MCU) comprend un afficheur ou un composant électronique de communication, un composant de reconnaissance vocale, un composant d'intelligence artificielle et/ou d'apprentissage autonome, un composant de collecte et de mémorisation de données.

7. Système de communication entre un lecteur radiofréquence (16) et un dispositif transpondeur radiofréquence (2, SE) relié à un périphérique (4, MCU), ledit dispositif étant configuré pour piloter un périphérique et pour mesurer une valeur (IB) du champ électromagnétique,
**caractérisé en ce que** le dispositif transpondeur radiofréquence (2, SE) pilote le périphérique (4, MCU) pour un traitement électronique après détermination par le dispositif d'une valeur suffisante (IB) de champ radiofréquence pour réaliser complètement ledit traitement électronique.

8. Système selon la revendication précédente, **caractérisé en ce que** le dispositif comprend un contrôleur (2, SE) configuré pour déterminer un seuil (IA) de champ ou d'intensité suffisant pour l'exécution complète par ledit périphérique du traitement électronique et pour mémoriser ledit seuil (IA) dans le contrôleur (2, SE).
